# EUROPÄISCHE PATENTANMELDUNG

(11) **EP 2 439 293 A1**
(43) Veröffentlichungstag der Anmeldung: **11.04.2012**
(21) Anmeldenummer: 10186669.7
(22) Anmeldetag: 06.10.2010
(51) Int. Cl.: C22B 7/00, C22B 59/00

(54) **Verfahren zur Rückgewinnung von Lanthan aus lanthanhaltigen Zeolithen**

(71) Anmelder: Ferro Duo GmbH, 47053 Duisburg (DE)
(72) Erfinder: Kehrmann, Alexander, 46509 Xanten (DE)
(74) Vertreter: HOFFMANN EITLE

(57) **Zusammenfassung**

Die vorliegende Erfindung betrifft ein Verfahren zur Rückgewinnung von Lanthan aus lanthanhaltigen Zeolith-Verbindungen, welches dadurch gekennzeichnet ist, dass (A) eine oder mehrere lanthanhaltige Zeolith-Verbindungen mit einer wässrigen Säure versetzt werden, so dass ein pH-Wert von kleiner oder gleich 3 vorliegt, und (B) gelöstes Lanthan abgetrennt wird. Das erfindungsgemäße Verfahren erlaubt es, bei der Rückgewinnung von Lanthan aus lanthanhaltigen Zeolithen auf die Verwendung korrodierender Gase wie Chlor und Chlorwasserstoff sowie korrodierender oxidativer Metallschmelzen zu verzichten und so die apparativen Anforderungen und die Prozessführung zu vereinfachen. Die vorliegende Erfindung ermöglicht die Rückgewinnung von Lanthan aus lanthanhaltigen Zeolith-Verbindungen, die als Katalysator-Abfälle aus großchemischen Stoffumwandlungsprozessen, wie beispielsweise dem Fluid Catalytic Cracking-Verfahren (FCC-Verfahren), dem Hydrocracking-Verfahren oder dem Claus-Prozess, anfallen.

## Beschreibung

Die nachhaltige Sicherung der Rohstoffversorgung ist eine Herausforderung für die Zukunft, deren Bedeutung mit der des Klimaschutzes vergleichbar ist. Von besonderem Interesse sind dabei Metalle mit industrieller Anwendung wie beispielsweise die Seltenerdmetalle, zu denen die Elemente Scandium, Yttrium, Lanthan der Gruppe 3 sowie die 14 auf das Lanthan folgenden Elemente der Lanthanoide: Cer, Praesodym, Neodym, Promethium, Samarium, Europium, Gadolinium, Terbium, Dysprosium, Holmium, Erbium, Thulium, Ytterbium und Lutetium gehören. Die Mineralien der Seltenerdmetalle werden in drei große Gruppen eingeteilt: (1) die Ceriterden, welche vorwiegend Erze der leichteren Lanthanoide von Lanthan bis Gadolinium enthalten; (2) die Yttererden, welche neben Yttrium und Scandium vorwiegend Erze der schwereren Lanthanoide von Terbium bis Lutetium enthalten; und (3) die "komplexen Erze", welche zu etwa gleichen Teilen aus Ceriterden und Yttererden bestehen. Da die Lanthanoide ähnliche chemische und physikalische Eigenschaften aufweisen, sind sie relativ schwer voneinander zu trennen. Das wichtigste Erz zur Lanthanherstellung ist der Monazitsand, welcher zu den Ceriterden zählt. Lanthan kommt in der Erdkruste mit einer mittleren relativen Häufigkeit von 17 ppm vor, was 17 mg Lanthan pro kg Erdkrustengestein entspricht.

Lanthan findet vielerlei Anwendungen in der Industrie. So wird elementares Lanthan beispielsweise als Legierungshilfsmittel in der Stahlherstellung zur reduktiven Entfernung von nichtmetallischen Verunreinigungen wie beispielsweise Sauerstoff und Schwefel verwendet. Als Gusseisenzusatz unterstützt es die Bildung von Kugelgraphit, als Legierungszusatz bewirkt es eine Verbesserung der Oxidationsbeständigkeit. Lanthanlegierungen weisen eine Vielzahl von interessanten physikalischen und chemischen Eigenschaften auf. So wird beispielsweise die Cobalt-Lanthan-Legierung (LaCo₅) als Magnetwerkstoff mit dauermagnetischen Eigenschaften verwendet und Lanthan-Nickel (LaNi₅) findet als Wasserstoffspeicher in Nickel-Metallhydrid-Akkumulatoren Verwendung. In Verbindung mit Cobalt, Eisen, Mangan, Strontium, u. a. wird Lanthan als Kathodenmaterial für Hochtemperatur-Brennstoffzellen verwendet. Lanthan-Titan-Legierungen werden im medizinischen Bereich für die Herstellung von korrosionsbeständigen und gut sterilisierbaren Instrumenten eingesetzt.

Die wichtigste oxidische Lanthanverbindung ist Lanthanoxid (La₂O₃), welches für die Herstellung von hochbrechenden Gläsern für die Produktion von optischen Linsen verwendet wird. La₂O₃ wird für die Herstellung von Kristallglas und Porzellanglasuren eingesetzt und ersetzt giftigere Bleiverbindungen unter gleichzeitiger Verbesserung der chemischen Beständigkeit. Zudem findet La₂O₃ Verwendung in der Herstellung von keramischen Kondensatormassen, silikatfreien Gläser und Glaspoliermitteln. Weitere LanthanVerbindungen wie Lanthanborid (LaB₆) werden als Kathodenmaterial zur Erzeugung freier Elektronen eingesetzt und Lanthanverbindungen, die mit weiteren Seltenerdmetallen wie beispielsweise Europiumoxid oder Samariumoxid dotiert sind, fluoreszieren bei Elektronenstrahlanregung mit roter Farbe.

Eine Vielzahl von Lanthan-Verbindungen besitzen katalytische Eigenschaften und werden als Katalysatoren zum Cracken von langkettigen Kohlenwasserstoffen in der Benzinherstellung eingesetzt. Große Bedeutung kommt dabei den lanthanhaltigen Zeolithen zu, die als heterogene bifunktionelle saure Katalysatoren in der erdölverarbeitenden Industrie für den Prozess des "Fluid Catalytic Crackings" (FCC) eingesetzt werden. Das FCC-Verfahren ist der bedeutendste Stoffumwandlungsprozess in der erdöl verarbeitenden Industrie und erlaubt die Umsetzung schwerer Erdölfraktionen zu wertvollen kurzkettigen Olefinen wie beispielsweise Ethen, Propen und Buten, sowie zu Catcracker-Benzin, Gasöl- und Schweröl-Komponenten. Während der Crackreaktion entstehen größere Mengen an Koks, die sich auf der Katalysatoroberfläche absetzen und diesen schnell desaktivieren. Um den Katalysator zu regenerieren, werden die Koksablagerungen bei einer Temperatur von 700 °C in Gegenwart von Luft zu Kohlenmonoxid oder Kohlendioxid oxidiert. Die eingesetzten lanthanhaltigen Zeolith-Katalysatoren verlieren jedoch im Laufe der Zeit durch Sinterung und Oberflächenverringerung an katalytischer Aktivität und müssen durch frischen Katalysator ersetzt werden. Die Menge an umlaufendem Katalysator in einer FCC-Anlage kann das Fünffache der Masse des Zulaufs an hochsiedenden Erdölfraktionen betragen. Da es sich bei dem FCC-Verfahren um einen großchemischen Prozess handelt, sind dementsprechend große Mengen an lanthanhaltigen Zeolithen im Einsatz, die nach Erreichen ihrer Standzeit in einer FCC-Anlage als Ausgangsmaterial für die Rückgewinnung von Lanthan zur Verfügung stehen.

Die vorliegende Erfindung betrifft ein Verfahren zur Rückgewinnung von Lanthan aus lanthanhaltigen Zeolithen durch Umsetzung mit wässrigen Mineralsäuren und anschließender Abtrennung des gelösten Lanthans.

Für die Rückgewinnung von Metallen aus Katalysatoren sind eine Vielzahl unterschiedlicher Verfahren beschrieben.

Aus EP 0 767 243 B1 ist die Rückgewinnung von Aktivkomponenten aus Trägerkatalysatoren oder Vollkatalysatoren durch Umsetzung mit einem im Wesentlichen wasserfreien gasförmigen Halogenwasserstoff und gegebenenfalls einer nachfolgenden fraktionierten Trennung bekannt. Die Umsetzung der Trägerkatalysatoren mit Aktivkomponenten mit wasserfreiem Halogenwasserstoff erfolgt in einem Rohrreaktor bei Temperaturen bis zu 900 °C. Bei der Rückgewinnung von Lanthan ist eine vorangehende Reduktion mit Wasserstoff oder Kohlenmonoxid erforderlich, bevor die Umsetzung mit wasserfreiem Halogenwasserstoff erfolgt. Um eine möglichst vollständigen Austrag der Aktivkomponenten aus den. Trägerkatalysatoren zu erzielen, ist je nach Metall eine wiederholte Behandlung mit wasserfreiem Halogenwasserstoff erforderlich. Die Abtrennung der Metallhalogenide erfolgt aus der Gasphase mit Hilfe von Kühlfallen.

Aus EP 0 017 285 A1 ist ein Verfahren zur Gewinnung von Molybdän, Vanadium und Aluminium aus gebrauchten Katalysatoren durch Behandlung mit einer Mischung aus elementaren Chlor, Chlorwasserstoff und Wasserdampf bekannt.

EP 2 157 198 A1 beschreibt ein Verfahren zur Gewinnung von metallischem Ruthenium oder Rutheniumverbindungen aus rutheniumhaltigen Feststoffen durch Behandlung mit Halogenwasserstoff und Kohlenmonoxid in der Gasphase bei Temperaturen bei Temperaturen bei bis zu 700 °C. Die Rutheniumverbindungen werden durch Abscheidung in einer Abscheidungszone, die kälter ist als die Reaktionszone, erhalten.

DE 10 2007 020 142 A1 beschreibt ebenfalls ein Verfahren zur Rückgewinnung von Ruthenium in Form von Rutheniumhalogenid aus rutheniumhaltigen geträgerten Katalysatormaterialien, welches ein Aufschmelzen des Katalysatormaterials in Gegenwart eines Oxidationsmittels und optional eines Alkalihydroxids und/oder eines Alkalicarbonats bei einer Temperatur von bis zu 750 °C umfasst. Anschließend wird die Schmelze abgekühlt und mit Mineralsäure behandelt, nicht gelöstes Trägermaterial wird entfernt und die rohe Rutheniumlösung auf einen pH-Wert von höchstens 5 eingestellt.

WO 2007/099119 A1 beschreibt ein Verfahren zum sauren Aufschluss von metallhaltigen Verbindungen durch Laugung mittels eines wässrigen Laugungsmittels, wobei das wässrige Laugungsmittel i) eine oder mehrere Alkansulfonsäuren und gegebenenfalls Schwefelsäure und/oder ii) ein Gemisch aus einem oder mehreren Alkansulfonsäuresalzen und Schwefelsäure enthält. Das in WO 2007/099119 A1 beschriebene Verfahren kann zur Gewinnung von Metallen aus metallhaltige Erzen wie Oxide, Sulfide, Arsenide, Halogenide, Carbonate, Phosphate und Sulfate verwendet werden. Die Behandlung von Kupfererz mit Schwefelsäure und/oder Methansulfonsäure beziehungsweise Natrium-Methansulfonat für 26,5 Stunden (2,5 Stunden intensives Rühren und 24 Stunden stehen lassen) führt beispielsweise zu Kupferausbeuten zwischen 35 und 38% im Filtrat.

Im gegenwärtigen Stand der Technik ist bisher noch kein Verfahren zur Rückgewinndung von Lanthan aus lanthanhaltigen Zeolith-Verbindungen, welche als Katalysatoren in einer FCC-Anlage zum Einsatz kamen, beschrieben.

Nachteilig an den zuvor beschriebenen Verfahren zur Rückgewinnung von Metallen aus Trägerkatalysatoren sind einerseits die hohen erforderlichen Temperaturen und der dadurch verursachte hohe Energieeinsatz sowie der Einsatz von korrodierenden Gasen wie Chlor und Chlorwasserstoff beziehungsweise die Herstellung einer korrodierenden oxidativen Metallsalzschmelze, welche hohe apparative Anforderungen an eine großtechnische Umsetzung stellen.

Andererseits sind bei den zuvor beschriebenen Verfahren zur Rückgewinnung von Metallen aus Trägerkatalysatoren wiederholte Behandlungen mit den jeweiligen Agenzien erforderlich, um eine möglichst vollständige Rückgewinnung der Metalle aus den jeweiligen Katalysatorträgermaterialien zu erzielen. Dies ist insbesondere dann der Fall, wenn die für die Rückgewinnung vorgesehene Metallspezies fest mit dem Trägermaterial verbunden ist. Eine solche wiederholte Behandlung führt dazu, dass sowohl der zeitliche Aufwand als auch der Energieeinsatz bei der Metallrückgewinnung weiter steigen.

### Zusammenfassung der Ereindung:

Es ist somit eine Aufgabe der Erfindung, ein geeignetes Verfahren zur Verfügung zu stellen, welches eine Rückgewinnung von Lanthan aus lanthanhaltigen Zeolith-Verbindungen, ermöglicht. Bei den lanthanhaltigen Zeolith-Verbindungen für das erfindungsgemäße Verfahren handelt es sich insbesondere um Katalysator-Abfälle aus großtechnischen chemischen Stoffumwandlungsprozessen, wie beispielsweise dem FCC-Verfahren, dem Hydrocracksng-Verfahren oder dem Claus-Prozess.

Die Erfindung zielt darauf ab, die oben formulierte Aufgabe zu lösen. Insbesondere wird die oben formulierte Aufgabe gelöst durch
[1] ein Verfahren zur Rückgewinnung von Lanthan aus lanthanhaltigen Zeolithen, dadurch gekennzeichnet, dass (A) eine oder mehrere lanthanhaltige Zeolith-Verbindungen mit einer wässrigen Säure versetzt werden, so dass ein pH-Wert von kleiner oder gleich 3 vorliegt, und (B) gelöstes Lanthan abgetrennt wird;
[2] ein Verfahren zur Rückgewinnung von Lanthan aus lanthanhaltigen Zeolithen gemäß Punkt [1], dadurch gekennzeichnet, dass die lanthanhaltigen Zeolith-Verbindungen eine Korngröße von kleiner oder gleich 200 µm aufweisen;
[3] ein Verfahren zur Rückgewinnung von Lanthan aus lanthanhaltigen Zeolithen gemäß Punkt [1], dadurch gekennzeichnet, dass die lanthanhaltigen Zeolith-Verbindungen eine Korngröße von kleiner oder gleich 10 µm aufweisen;
[4] ein Verfahren zur Rückgewinnung von Lanthan aus lanthanhaltigen Zeolithen gemäß der Punkte [1], [2] oder [3], dadurch gekennzeichnet, dass die lanthanhaltigen Zeolith-Verbindungen in einem Gemisch mit weiteren nichtlanthanhaltigen Verbindungen vorliegen;
[5] ein Verfahren zur Rückgewinnung von Lanthan aus lanthanhaltigen Zeolithen gemäß der Punkte [1], [2], [3] oder [4], dadurch gekennzeichnet, dass die lanthanhaltigen Zeolith-Verbindungen eine Faujasit- und/oder Zeolith Y-Struktur aufweisen;
[6] ein Verfahren zur Rückgewinnung von Lanthan aus lanthanhaltigen Zeolithen gemäß Punkt [5], dadurch gekennzeichnet, dass die lanthanhaitigen Zeolith-Verbindungen Aluminium in einem Stoffmengenanteil von 37.5 bis 47.5 Mol-% A1₂O₃ und Silizium in einem Stoffmengenanteil von 42.5 bis 52.5 Mol-% SiO₂ enthalten, wobei für jede lanthanhaltige Zeolith-Verbindung die Summe der Stoffmengenanteile aller vorhandener Bestandteile 100 Mol-% beträgt;
[7] ein Verfahren zur Rückgewinnung von Lanthan aus lanthanhaltigen Zeolithen gemäß Punkt [6], dadurch gekennzeichnet dass die lanthanhaltigen Zeolith-Verbindungen Lanthan in einem Stoffmengenanteil von 0.5 bis 5 Mol-% La₂O₃ enthalten;
[8] ein Verfahren zur Rückgewinnung von Lanthan aus lanthanhaltige Zeolithen gemäß der Punkte [1], [2], [3], [4], [5], [6] oder [7], dadurch gekennzeichnet, dass der pH-Wert kleiner oder gleich 2 ist;
[9] ein Verfahren zur Rückgewinnung von Lanthan aus lanthanhaltigen Zeolithen gemäß der Punkte [1], [2], [3], [4], [5], [6] oder [7], dadurch gekennzeichnet, dass der pH-Wert kleiner oder gleich 1 ist;
[10] ein Verfahren zur Rückgewinnung von Lanthan aus lanthanhaltigen Zeolithen gemäß der Punkte [1], [2], [3], [4], [5], [6] oder [7], dadurch gekennzeichnet, dass der pH-Wert kleiner oder gleich 0 ist;
[11] ein Verfahren zur Rückgewinnung von Lanthan aus lanthanhaltigen Zeolithen gemäß der Punkte [1], [2], [3], [4], [5], [6], [7], [8], [9] oder [10], dadurch gekennzeichnet, dass die wässroge Säure wässrige Salzsäure, wässrige Schwefelsäure oder wässrige Salpetersäure oder ein Gemisch aus mindestens zwei dieser Säuren ist;
[12] ein Verfahren zur Rückgewinnung von Lanthan aus lanthanhaltigen Zeolithen gemäß der Punkte [1], [2], [3], [4], [5], [6], [7], [8], [9], [10] oder [11], dadurch gekennzeichnet, dass (B) gelöstes Lanthan mittels Filtration vom unlöslichen festen Rückstand abgetrennt wird;
[13] Verfahren zur Rückgewinnung von Lanthan aus lanthanhaltigen Zeolithen gemäß Punkt [12], dadurch gekennzeichnet, dass im Filtrat gelöstes Lanthan durch selektive Kristallisation, selektive Fällung oder selektiven Ionenaustausch von im Filtrat gelösten Aluminium abgetrennt wird;
[14] ein Verfahren zur Rückgewinnung von Lanthan aus lanthanhaltigen Zeolithen gemäß Punkt [12], dadurch gekennzeichnet, dass im Filtrat gelöstes Lanthan durch selektive Kristallisation von im Filtrat gelösten Aluminium abgetrennt wird;
[15] Verfahren zur Rückgewinnung von Lanthan aus lanthanhaltigen Zeolithen gemäß Punkt [12], dadurch gekennzeichnet, dass im Filtrat gelöstes Lanthan durch selektive Fällung von im Filtrat gelösten Aluminium abgetrennt wird;
[16] ein Verfahren zur Rückgewinnung von Lanthan aus lanthanhaltigen Zeolithen gemäß Punkt [12], dadurch gekennzeichnet, dass im Filtrat gelöstes Lanthan durch selektiven Ionenaustausch von im Filtrat gelösten Aluminium abgetrennt wird;
[17] ein Verfahren zur Rückgewinnung von Lanthan aus lanthanhaltigen Zeolithen gemäß der Punkte [1], [2], [3], [4], [5], [6], [7], [8], [9], [10], [11], [12], [13], [14], [15] oder [16], dadurch gekennzeichnet, dass (A) eine oder mehrere lanthanhaltige Zeolith-Verbindungen mit einer wässrigen Säure versetzt werden und während des sauren Aufschlusses keine Wärmezufuhr von außen erfolgt.

### Kurze Beschreibung der Figuren

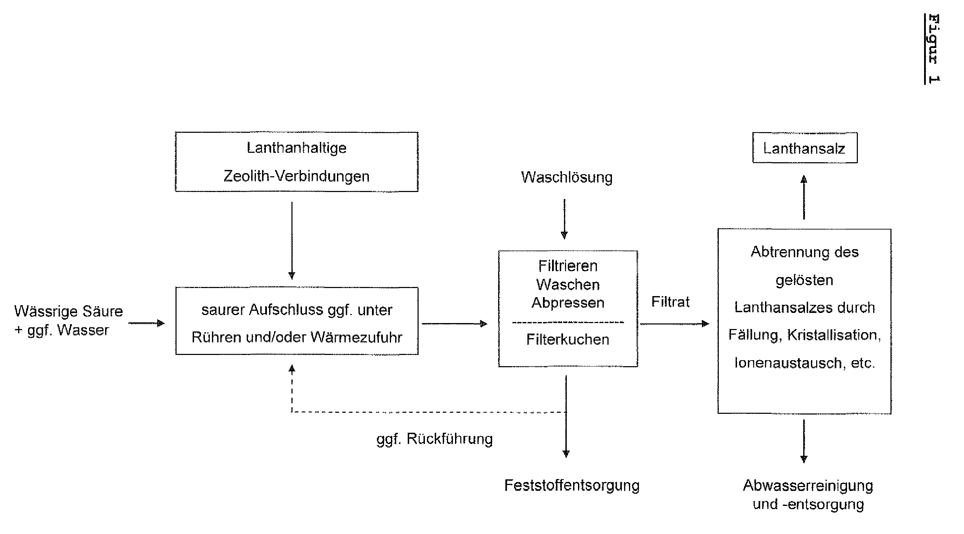

Figur 1 zeigt ein Fließschema, das eine mögliche Ausführungsform des erfindungsgemäßen Verfahrens beschreibt. Hierbei werden die lanthanhaltigen Zeolith-Verbindungen mit Wasser und einer wässrigen Säure behandelt, so dass ein saurer Aufschluss erfolgt. Der saure Aufschluss kann gegebenenfalls unter Rühren und/oder Wärmezufuhr erfolgen. Anschließend wird der unlösliche feste Rückstand beispielsweise mittels Filtration abgetrennt, gewaschen und abgepresst, um einen Filterkuchen zu erhalten, welcher gegebenenfalls erneut dem sauren Aufschluss zugeführt wird oder als Feststoffabfall entsorgt wird. Die im Filtrat enthaltenen gelösten Lanthansalze werden durch Fällung, Kristallisation, Ionenaustausch, etc. aus der Lösung abgetrennt.

### Genaue Beschreibung der Erfindung:

### Definitionen:

Der Begriff "lanthanhaltige Zeolithe" bezeichnet sämtliche Zeolithe, die durch Ionenaustausch oder eine sonstige chemische Behandlung dahingehend modifiziert wurden, dass sie ein oder mehrere Lanthan-Atome (Ordnungszahl 57), welche gegebenenfalls als Lanthan-Ionen positiv geladen sein können, enthalten.

Der Begriff "Rückgewinnung von Lanthan" bezieht sich auf die Abtrennung von Lanthan aus lanthanhaltigen Zeolithen mithilfe von chemischen und/oder physikalischen Verfahrensschritten. Die Rückgewinnung von Lanthan aus lanthanhaltige Zeolithen beinhaltet das Auflösen von Lanthan-Atomen und/oder Lanthan-Ionen mit Hilfe eines wässrigen Lösungsmittels und schließt gegebenenfalls einen darauf folgenden einstufigen oder mehrstufigen Aufreinigungsprozess der lanthanhaltigen Lösung mit ein, der die Abtrennung des gelösten Lanthans in Form eines Lanthansalzes ermöglicht.

### Lanthanhaltige Zeolith-Verbindungen;

Zu den lanthanhaltige Zeolith-Verbindungen zählen alle Verbindungen aus der Gruppe der Zeolithe, die durch Ionenaustausch oder eine sonstige chemische Behandlung dahingehend modifiziert wurden, dass sie ein oder mehrere Lanthan-Atome, welche gegebenenfalls als Lanthan-Ionen positiv geladen sein können, enthalten. Hierbei können zum einen ein oder mehrere Lanthan-Atome auf eine strukturelle Formeleinheit des Zeoliths entfallen oder zum anderen ein Lanthan-Atom auf mehr als eine strukturelle Formeleinheit des Zeoliths entfallen, so wie es beispielsweise bei einer Lanthan-Dotierung der Fall ist.

Zeolith-Verbindungen sind kristalline Alumosilikate, die in zahlreichen Modifikationen in der Natur vorkommen, aber auch synthetisch hergestellt werden können. Die allgemeine Zusammensetzung von Zeolith-Verbindungen ist durch die folgende Formel gegeben: M_{x/n}[ (AlO₂)ₓ(SiO₂)_{y}] z H₂O), wobei M ein Metall ist, n die Ladung des Metalls angibt und meistens n = 1 oder 2 ist, und x, y und Z ganze natürliche Zahlen sind. Wichtige Zeolith-Verbindungen sind unter anderem ZSM-5, Zeolith A und Zeolith Y. Zeolith-Verbindungen bestehen aus A10₄⁻- und SiO₄-Tetraedern, die eine mikroporöse Gerüststruktur ausbilden, welche eine sehr große innere Oberfläche, von zum Teil mehr als 1000 m² pro g haben können. Durch dreiwertige Aluminiumatome, denen formal zwei zweiwertige Sauerstoffteilchen zugeordnet werden können, besitzen Zeolithe eine anionische Gerüstladung. An der inneren und äußeren Oberfläche befinden sich bei aluminiumhaltigen Zeolithen Kationen wie beispielsweise Na⁺, K⁺, Ca²⁺ und Mg²⁺, welche austauschbar sind. Zeolith-Verbindungen können durch Austausch der Ionen oder eine sonstige chemische Behandlung modifiziert werden, so dass sie ein oder mehrere Lanthan-Atome, welche als Lanthan-Ionen positiv geladen sein können, enthalten. Lanthanhaltige Zeolith-Verbindungen, die ausgehend von Zeolith Y erhalten werden, weisen eine Faujasit-Struktur beziehungsweise eine Zeolith Y-Struktur auf und dienen vorzugsweise als Ausgangsmaterial für das erfindungsgemäße Verfahren.

Die lanthanhaltigen Zeolith-Verbindungen, welche als Ausgangsmaterial für das erfindungsgemäße Verfahren eingesetzt werden, weisen vorzugsweise eine Faujasitund/oder Zeolith Y-Struktur auf.

Die lanthanhaltigen Zeolith-Verbindungen, welche als Ausgangsmaterial für das erfindungsgemäße Verfahren eingesetzt werden, enthalten Aluminium, Silizium, Sauerstoff und Lanthan. Optional können weitere Metall-Atome, welche gegebenenfalls als Metall-Ionen positiv geladen sein können, oder weitere Nichtmetall-Atome, welche gegebenenfalls als Nichtmetall-Ionen negativ geladen sein können, in den lanthanhaltigen Zeolith-Verbindungen enthalten sein.

Weitere Metall-Atome sind beispielsweise Lithium, Natrium, Kalium, Magnesium, Calcium, Eisen und Titan, vorzugsweise Natrium, Eisen und Titan. Weitere Nichtmetall-Atome sind beispielsweise Wasserstoff, Bor, Kohlenstoff, Stickstoff, Schwefel, Fluor, Chlor und Brom.

Die chemische Zusammensetzung der lanthanhaltigen Zeolith-Verbindungen kann mithilfe energiedispersiver Röntgenspektroskopse (EDX) bestimmt werden. Desweiteren können Röntgenbeugungsanalysen zur Charakterisierung der lanthanhaltigen Zeolith-Verbindungen eingesetzt werden.

Die lanthanhaltigen Zeolith-Verbindungen, welche als Ausgangsmaterial für das erfindungsgemäße Verfahren eingesetzt werden, weisen vorzugsweise eine Faujasitund/oder Zeolith Y-Struktur auf und enthalten vorzugsweise Aluminium in einem Stoffmengenanteil von 37.5 bis 47.5 Mol-% Al₂O₃ und Silizium in einem Stoffmengenanteil von 42.5 bis 52.5 Mol-% SiO₂, stärker bevorzugt Aluminium in einem Stoffmengenanteil von 38.5 bis 46.5 Mol-% Al₂O₃ und Silizium in einem Stoffmengenanteil von 43.5 bis 51.5 Mol-%, weiterhin stärker bevorzugt Aluminium in einem Stoffmengenanteil von 39.5 bis 45.5 Mol-% Al₂O₃ und Silizium in einem Stoffmengenanteil von 44.5 bis 50.5 Mol-% SiO₂, weiterhin stärker bevorzugt Aluminium in einem Stoffmengenanteil von 40.5 bis 44.5 Mol-% Al₂C₃ und Silizium in einem Stoffmengenanteil von 45.5 bis 49.5 Mol-% SiO₂ und am stärksten bevorzugt Aluminium in einem Stoffmengenanteil von 41.5 bis 43.5 Mol-% Al₂O₃ und Silizium in einem Stoffmengenanteil von 46.5 bis 48.5 Mol-% SiO₂, wobei für jede lanthanhaltige Zeolith-Verbindung die Summe der Stoffmengenanteile aller vorhandener Bestandteile 100 Mol-% beträgt.

Die lanthanhaltigen Zeolith-Verbindungen, welche als Ausgangsmaterial für das erfindungsgemäße Verfahren eingesetzt werden, weisen vorzugsweise eine Faujasitund/oder Zeolith Y-Struktur auf und enthalten vorzugsweise Lanthan in einem Stoffmengenanteil von 0.5 bis 5 Mol-% La₂O₃, stärker bevorzugt Lanthan in einem Stoffmengenanteil von 0.5 bis 4 Mol-% La₂O₃, weiterhin stärker bevorzugt Lanthan in einem Stoffmengenanteil von 0.5 bis 3 Mol-% La₂O₃, weiterhin stärker bevorzugt Lanthan in einem Stoffmengenanteil von 0.5 bis 2 Mol-% La₂O₃ und am stärksten bevorzugt Lanthan in einem Stoffmengenanteil von 0.9 bis 2 Mol-% La₂O₃, wobei für jede lanthanhaltige Zeolith-Verbindung die Summe der Stoffmengenanteile aller vorhandener Bestandteile 100 Mol-% beträgt.

In einer bevorzugten Ausführungsform weisen die lanthanhaltigen Zeolith-Verbindungen, welche als Ausgangsmaterial für das erfindungsgemäße Verfahren eingesetzt werden, eine Faujasit- und/oder Zeolith Y-Struktur auf und enthalten Aluminium in einem Stoffmengenanteil von 37.5 bis 47.5 Mol-% Al₂O₃, Silizium in einem Stoffmengenanteil von 42.5 bis 52.5 Mol-% SiO₂ und Lanthan in einem Stoffmengenanteil von 0.5 bis 5 Mol-% La₂O₃, wobei für jede lanthanhaltige Zeolith-Verbindung die Summe der Stoffmengenanteile aller vorhandener Bestandteile 100 Mol-% beträgt.

In einer weiteren bevorzugten Ausführungsform weisen die lanthanhaltigen Zeolith-Verbindungen, welche als Ausgangsmaterial für das erfindungsgemäße Verfahren eingesetzt werden, eine Faujasit- und/oder Zeolith Y-Struktur auf und enthalten Aluminium in einem Stoffmengenanteil von 38.5 bis 46.5 Mol-% Al₂O₃, Silizium in einem Stoffmengenanteil von 43.5 bis 51.5 Mol-% SiO₂ und Lanthan in einem Stoffmengenanteil von 0.5 bis 4 Mol-% La₂O₃, wobei für jede lanthanhaltige Zeolith-Verbindung die Summe der Stoffmengenanteile aller vorhandener Bestandteile 100 Mol-% beträgt.

In einer weiteren bevorzugten Ausführungsform weisen die lanthanhaltigen Zeolith-Verbindungen, welche als Ausgangsmaterial für das erfindungsgemäße Verfahren eingesetzt werden, eine Faujasit- und/oder Zeolith Y-Struktur auf und enthalten Aluminium in einem Stoffmengenanteil von 39.5 bis 45.5 Mol-% Al₂O₃, Silizium in einem Stoffmengenanteil von 44.5 bis 50.5 Mol-% SiO₂ und Lanthan in einem Stoffmengenanteil von 0.5 bis 3 Mol-% La₂O₃, wobei für jede lanthanhaltige Zeolith-Verbindung die Summe der Stoffmengenanteile aller vorhandener Bestandteile 100 Mol-% beträgt.

In einer weiteren bevorzugten Ausführungsform weisen die lanthanhaltigen Zeolith-Verbindungen, welche als Ausgangsmaterial für das erfindungsgemäße Verfahren eingesetzt werden, eine Faujasit- und/oder Zeolith Y-Struktur auf und enthalten Aluminium in einem Stoffmengenanteil von 40.5 bis 44.5 Mol-% Al₂O₃, Silizium in einem Stoffmengenanteil von 45.5 bis 49.5 Mol-% SiO₂ und Lanthan in einem Stoffmengenanteil von 0.5 bis 2 Mol-% La₂O₃, wobei für jede lanthanhaltige Zeolith-Verbindung die Summe der Stoffmengenanteile aller vorhandener Bestandteile 100 Mol-% beträgt.

In einer weiteren bevorzugten Ausführungsform weisen die lanthanhaltigen Zeolith-Verbindungen, welche als Ausgangsmaterial für das erfindungsgemäße Verfahren eingesetzt werden, eine Faujasit- und/oder Zeolith Y-Struktur auf und enthalten Aluminium in einem Stoffmengenanteil von 41.5 bis 43.5 Mol-% Al₂O₃, Silizium in einem Stoffmengenanteil von 46.5 bis 48.5 Mol-% SiO₂ und Lanthan in einem Stoffmengenanteil von 0.9 bis 2 Mol-% La₂O₃, wobei für jede lanthanhaltige Zeolith-Verbindung die Summe der Stoffmengenanteile aller vorhandener Bestandteile 100 Mol-% beträgt.

Die lanthanhaltigen Zeolith-Verbindungen werden als Ausgangsmaterial für das erfindungsgemäße Verfahren eingesetzt und können in einem Gemisch mit weiteren nichtlanthanhaltigen Verbindungen vorliegen, ohne dass sich nachteilige Auswirkungen auf die Rückgewinnung des Lanthans aus den lanthanhaltigen Zeolith-Verbindungen ergeben. Nichtlanthanhaltige Verbindungen sind vorzugsweise nichtlanthanhaltige Zeolith-Verbindungen.

Bei den lanthanhaltigen Zeolith-Verbindungen kann es sich um Zeolith-Katalysator-Abfälle aus großchemische.n Stoffumwandlungsprozessen, wie beispielsweise dem Fluid Catalytic Cracking-Verfahren (FCC-Verfahren), dem Hydrocracking-Verfahren oder dem Claus-Prozess, handeln.

Die lanthanhaltigen Zeolith-Verbindungen stellen das Ausgangsmaterial für das erfindungsgemäße Verfahren dar und weisen eine Korngröße von vorzugsweise kleiner oder gleich 200 µm, stärker bevorzugt von kleiner oder gleich 100 µm, weiterhin stärker bevorzugt von kleiner oder gleich 50 µm, weiterhin stärker bevorzugt von kleiner oder gleich 30 µm weiterhin stärker bevorzugt von kleiner oder gleich 20 µm, und am stärksten bevorzugt von kleiner oder gleich 10 µm auf. In der Regel ist die Korngröße der lanthanhaltigen Zeolith-Verbindungen jedoch nicht kleiner als 1 µm.

Um die bevorzugten Korngrößen zu erzielen, können die lanthanhaltigen Zeolith-Verbindungen gegebenenfalls vor ihrem Einsatz als Ausgangsmaterial für das erfindungsgemäße Verfahren zerkleinert werden. Die Zerkleinerung kann durch Mahlen, Walzen oder durch Ultraschall erfolgen. Falls erforderlich, kann sich an die Zerkleinerung ein Klassierungsschritt beispielsweise unter Verwendung eines Siebes anschließen.

Die maximalen Korngrößen der lanthanhaltigen Zeolith-Verbindungen können mithilfe einer entsprechenden lasergranulometrischen Korngrößenverteilungsanalyse bestimmt werden.

### Saurer Aufschluss der lanthanhaltigen Zeolith-Verbindungen (A) :

Das erfindungsgemäße Verfahren ist dadurch
gekennzeichnet, dass die lanthanhaltigen Zeolith-Verbindungen mit einer wässrigen Säure versetzt werden und dadurch die in den lanthanhaltigen Zeolith-Verbindungen vorhandenen Lanthan-Atome und/oder Lanthan-Ionen in Lösung gehen. Während dieses sauren Aufschlusses der lanthanhaltigen Zeolith-Verbindung erfolgt ein inniges Durchmischen durch eine geeignete Rühreinrichtung, so dass die in den lanthanhaltigen Zeolith-Verbindungen vorhandenen Lanthan-Atomen und/oder Lanthan-Ionen in Lösung gehen.

Der saure Aufschluss der lanthanhaltigen Zeolith-Verbindungen kann wahlweise unter Wärmezufuhr von außen oder ohne Wärmezufuhr von außen erfolgen. In einer bevorzugten Ausführungsart des erfindungsgemäßen Verfahrens erfolgt der saure Aufschluss der lanthanhaltigen Zeolith-Verbindung ohne Wärmezufuhr von außen.

Während des sauren Aufschlusses ist es entscheidend, dass ein pH-Wert von kleiner oder gleich 3, bevorzugt von kleiner oder gleich 2, stärker bevorzugt von kleiner oder gleich 1, und am stärksten bevorzugt von kleiner oder gleich 0 vorliegt.

Ist der pH-Wert größer 3, so wird nur ein geringer Anteil des in den lanthanhaltigen Zeolithen vorhandenen Lanthans gelöst.

In einer bevorzugten Ausführungsform des erfindungsgemäßen Verfahrens liegt der pH-Wert im Bereich von -1 bis 3, stärker bevorzugt im Bereich von -1 bis 2, und am stärksten bevorzugt im Bereich von -1 bis 1.

In einer weiteren bevorzugten Ausführungsform des erfindungsgemäßen Verfahrens liegt der pH-Wert im Bereich von 0 bis 3, stärker bevorzugt im Bereich von 0 bis 2, und am stärksten bevorzugt im Bereich von 0 bis 1.

In einer weiteren Ausführungsform liegt der pH-Wert im Bereich von 1 bis 3, stärker bevorzugt im Bereich von 1 bis 2, und weiterhin stärker bevorzugt im Bereich von 2 bis 3.

In einer weiteren bevorzugten Ausführungsform des erfindungsgemäßen Verfahrens liegt der pH-Wert in einem symmetrischen Intervall um 1, wie vorzugsweise von 0.25 bis 1.75, von 0.5 bis 1.5, von 0.6 bis 1.4, von 0.7 bis 1.3, von 0.75 bis 1.25, von 0.8 bis 1.2, von 0.85 bis 1.15, von 0.9 bis 1.1, und von 0.95 bis 1.05.

In einer weiteren bevorzugten Ausführungsform des erfindungsgemäßen Verfahrens liegt der pH-Wert in einem symmetrischen Intervall um 0, wie vorzugsweise von -0.75 bis 0.75, von -0.5 bis 0.5, von -0.4 bis 0.4, von -0.3 bis 0.3, von -0.25 bis 0.25, von -0.2 bis 0.2, von -0.15 bis 0.15, von -0.1 bis 0.1, und von -0.05 bis 0.05.

Die für die Lösung der Lanthan-Atome aus den lanthanhaltigen Zeolith-Verbindungen verwendete wässrige Säure ist ein Gemisch aus Wasser und einer Mineralsäure und/oder einer organischen Säure.

Als Mineralsäure werden vorzugsweise Salzsäure, Schwefelsäure, Salpetersäure und Phosphorsäure eingesetzt.

Als organische Säuren werden vorzugsweise Sulfonsäuren und Phosphonsäuren eingesetzt. Als Sulfonsäuren können in der vorliegenden Erfindung zyklische, lineare und verzweigte Alkansulfonsäuren verwendet werden, deren Alkylreste 1 bis 20 Kohlenstoff-Atome aufweisen. Bevorzugt werden Methansulfonsäure, Ethansulfonsäure, Propansulfonsäure, und Sulfonsäuren mit linearen oder verzweigten Alkylresten, die 4 bis 12 Kohlenstoff-Atome aufweisen. Als Phosphonsäuren können in der vorliegenden Erfindung zyklische, lineare und verzweigte Alkanphosphonsäuren verwendet werden, deren Alkylreste 1 bis 20 Kohlenstoff-Atome aufweisen. Bevorzugt werden Methanphosphonsäure, Ethanphosphonsäure, Propanphosphonsäure, und Phosphonsäuren mit linearen oder verzweigten Alkylresten, die 4 bis 12 Kohlenstoff-Atome aufweisen.

Es können eine, zwei, drei oder mehr der zuvor angegebenen Säuren in Kombination für die Lösung der Lanthan-Atome aus den lanthanhaltigen Zeolith-Verbindungen verwendet werden. Die Säuren werden in der vorliegenden Erfindung in Form von wässrigen Säuren, welche wässrige Lösungen sind, eingesetzt. Die wässrigen Säuren können konzentrierte wässrige Säuren oder verdünnte wässrige Säuren sein. Konzentrierte wässrige Säuren sind gesättigte wässrige Lösungen der entsprechenden Säure-Verbindung. Verdünnte wässrige Säuren sind nicht-gesättigte wässrige Lösungen der entsprechenden Säure-Verbindung. Wird eine konzentrierte wässrige Säure verwendet, so kann bei der Zugabe der konzentrierten wässrigen Säure zu der lanthanhaltigen Zeolith-Verbindung eine Verdünnung der konzentrierten wässrigen Säure mit Wasser erfolgen. Die Verdünnung der konzentrierten wässrigen Säure mit Wasser kann erfolgen, indem die konzentrierte wässrige Säure zu Wasser gegeben wird oder Wasser zu der konzentrierten wässrigen Säure. Die Verdünnung der konzentrierten wässrigen Säure kann vor, während oder nach der Zugabe der konzentrierten wässrigen Säure zu der lanthanhaltigen Zeolith-Verbindung erfolgen.

Vorzugsweise wird in dem erfindungsgemäßen Verfahren wässrige Salzsäure, wässrige Schwefelsäure oder wässrige Salpetersäure oder ein Gemisch aus mindestens zwei dieser Säuren verwendet. Stärker bevorzugt ist wässrige Salzsäure. Besonders bevorzugt ist die Verwendung verdünnter wässriger Säuren, wie verdünnte wässrige Salzsäure, verdünnte wässrige Schwefelsäure oder verdünnte wässrige Salpetersäure oder ein Gemisch aus mindestens zwei dieser Säuren. Am stärksten bevorzugt ist verdünnte wässrige Salzsäure.

### Abtrennung des gelösten Lanthans (B):

Durch Versetzen der lanthanhaltigen Zeolith-Verbindung mit einer wässrigen Säure werden die in den lanthanhaltigen Zeolith-Verbindungen vorhandenen Lanthan-Atome und/oder Lanthan-Ionen gelöst. Das in Lösung vorliegende Lanthan wird anschließend über ein geeignetes Verfahren von dem unlöslichen festen Rückstand abgetrennt. Für diese Abtrennung können dem Fachmann bekannte Trennverfahren, welche eine Trennung aufgrund der Dichte oder der Partikelgröße, ermöglichen, eingesetzt werden. Trennverfahren, welche eine Trennung aufgrund der Dichte ermöglichen sind beispielsweise Sedimentation, Dekantation, Zentrifugation, Schwertrübetrennung und Schlämmung. Trennverfahren, welche eine Trennung aufgrund der Partikelgröße ermöglichen sind beispielsweise Filtration, Rechen, Sieben, Sichten und Membrantrennverfahren.

In einer bevorzugten Ausführungsform des erfindungsgemäßen Verfahrens erfolgt die Abtrennung des in Lösung vorliegenden Lanthans von dem unlöslichen festen Rückstand durch ein Trennverfahren, welches eine Trennung aufgrund der Partikelgröße ermöglicht. In einer besonders bevorzugten Ausführungsform des erfindungsgemäßen Verfahrens erfolgt die Abtrennung des in Lösung vorliegenden Lanthans von dem unlöslichen festen Rückstand durch Filtration.

Der nach der Abtrennung erhaltene Feststoff wird gewaschen und abgepresst. Als Waschlösung wird vorzugsweise diejenige wässrige Säure verwendet, mit welcher zuvor der saure Aufschluss der lanthanhaltigen Zeolith-Verbindung erfolgte. Es können wahlweise auch Waschlösungen anderer Art wie beispielsweise wässrige waschlösungen, nicht-wässrige waschlösungen oder Wasser verwendet werden. Der gewaschene und abgepresste Feststoff kann optional erneut dem sauren Aufschluss zugeführt werden, um noch vorhandenes nicht gelöstes Lanthan in Lösung zu bringen, oder als Feststoffabfall entsorgt werden. Die nach der Abtrennung vom unlöslichen festen Rückstand erhaltene lanthanhaltige Lösung wird einem weiteren Abtrennungsschritt (B) zugeführt, der es ermöglicht, das darin enthaltene gelöste Lanthan abzutrennen.

Der Abtrennungsschritt (B) ermöglicht die Abtrennung des in der Lösung enthaltenen Lanthans von gegebenenfalls in der Lösung enthaltenen anderen Elementen wie beispielsweise Aluminium. Aluminium, welches Bestandteil der lanthanhaltigen, Zeolith-Verbindungen ist, kann gemeinsam mit Lanthan in Lösung vorliegen, wohingegen Silizium, welches ebenfalls ein Bestandteil der lanthanhaltigen Zeolith-Verbindungen ist, unter den erfindungsgemäßen Bedingungen des sauren Aufschlusses nicht in Lösung geht und daher nicht gemeinsam mit Lanthan in Lösung vorliegt. Der Abtrennungsschritt (B) kann alle dem Fachmann bekannten Verfahren, welche eine Trennung von Lanthan und Aluminium in wässriger Lösung ermöglichen, umfassen.

Geeignete Verfahren zur Trennung von Lanthan und Aluminium in wässriger Lösung sind beispielsweise die selektive Kristallisation von Lanthan oder Aluminium aus wässriger Lösung; die selektive Fällung von Lanthan oder Aluminium aus wässriger Lösung durch Zugabe eines geeigneten Fällungsmittels, welches eine selektive Fällung von Lanthan oder Aluminium aus wässriger Lösung ermöglicht; sowie der selektive Ionenaustausch von Lanthan oder Aluminium aus wässriger Lösung durch Verwendung eines geeigneten Ionenaustauschers, welcher einen selektiven Ionenaustausch von Lanthan oder Aluminium aus wässriger Lösung ermöglicht. Die selektive Kristallisation von Lanthan oder Aluminium aus wässriger Lösung kann direkt oder nach Reduktion der wässrigen Lösung durch Eindampfen erfolgen.

Die im Abtrennungsschritt (B) enthaltenen bevorzugten Trennverfahren sind die selektive Kristallisation von Lanthan aus wässriger Lösung, die selektive Fällung von Lanthan aus wässriger Lösung durch Zugabe eines geeigneten Fällungsmittels, welches eine selektive Fällung von Lanthan aus wässriger Lösung ermöglicht, und der selektive Ionenaustausch von Lanthan aus wässriger Lösung durch Verwendung eines geeigneten Ionenaustauschers, welcher einen selektiven Ionenaustausch von Lanthan aus wässriger Lösung ermöglicht. Alle diese im Abtrennungsschritt (B) enthaltenen bevorzugten Trennverfahren ermöglichen die Abtrennung der in der wässrigen Lösung enthaltenen Lanthan-Ionen in Form eines Lanthan-Salzes.

Wird ein selektiver Ionenaustausch von Lanthan aus wässriger Lösung durch Verwendung eines geeigneten Ionenaustauschers, welcher einen selektiven Ionenaustausch ermöglicht, im Abtrennungsschritt (B) durchgeführt, so wird im Anschluss daran der mit Lanthan-Ionen beladene Ionenaustauscher von der wässrigen Lösung abgetrennt und die darin gebundenen Lanthan-Ionen werden durch ein geeignetes Verfahren freigesetzt, so dass der mit Lanthan-Ionen beladene Ionenaustauscher regeneriert wird und die freigesetzten Lanthan-Ionen in Form eines Lanthan-Salzes isoliert werden können. Die Regeneration des mit Lanthan-Ionen beladenen Ionenaustauschers kann durch Auswaschen der Lanthan-Ionen mit einem geeigneten Komplexierungsmittel wie beispielsweise einer Lösung von Ammoniumnitrat oder Ammoniumnitrilotriacetat erfolgen.

In einer besonders bevorzugten Ausführungsform des erfindungsgemäßen Verfahrens umfasst der Abtrennungsschritt (B) eine selektive Kristallisation von Lanthan aus wässriger Lösung.

In einer weiteren besonders bevorzugten Ausführungsform des erfindungsgemäßen Verfahrens umfasst der Abtrennungsschritt (B) eine selektive Fällung von Lanthan aus wässriger Lösung durch Zugabe eines geeigneten Fällungsmittels, welches eine selektive Fällung von Lanthan aus wässriger Lösung ermöglicht.

Geeignete Fällungsmittel, welche eine selektive Fällung von Lanthan aus wässriger Lösung ermöglichen sind beispielsweise wasserlösliche Oxalsäure-Salze wie beispielsweise Ammoniumoxalat ((NH₄)₂C₂O₄), Natriumoxalat (Na₂C₂O₄) und Kaliumoxalat (K₂C₂O₄).

In einer weiteren besonders bevorzugten Ausführungsform des erfindungsgemäßen Verfahrens umfasst der Abtrennungsschritt (B) einen selektiven Ionenaustausch von Lanthan aus wässriger Lösung durch Verwendung eines geeigneten Ionenaustauschers, weicher einen selektiven Ionenaustausch von Lanthan aus wässriger Lösung ermöglicht.

Geeignete Ionenaustauscher, welche einen selektiven Ionenaustausch von Lanthan aus wässriger Lösung ermöglichen, können feste Ionenaustauscher (fest-flüssig Extraktion) oder flüssige Ionenaustauscher (flüssig-flüssig Extraktion) sein. Flüssige Ionenaustauscher sind geeignete mit Wasser nicht mischbare organische Flüssigkeiten wie beispielsweise Tributylphosphat, 2-Ethylhexylphosphonäure-2-ethylhexylester oder Bis-2-ethylhexylphosphat.

### Verwendung des zurückgewonnenen Lanthans:

Das nach dem erfindungsgemäßen Verfahren zurückgewonnene Lanthan wird als Lanthansalz nach dem Abtrennungsschritt (B) erhalten. Lanthansalze, die mit dem erfindungsgemäßen Verfahren erhalten werden, sind beispielsweise Lanthanchlorid (LaCl₃), Lanthansulfat (La₂(SO₄)₃), Lanthanoxalat La₂(C₂O₄)₃) Lanthannitrat (La (NO₃)₃), Lanthanfluorid (LaF₃), Lanthanphosphat (LaPO₄), sowie Lanthansalze von Alkansulfonsäuren und Lanthansalze von Alkanphosphonsäuren. Die zuvor genannten Lanthansalze können durch Eindampfen, Kristallisation, Ionenaustausch oder Fällung erhalten werden. Lanthanoxalat (La₂(C₂O₄)₃) wird bevorzugt mittels Fällung hergestellt und abgetrennt, und kann durch Verglühen zu Lanthanoxid (La₂O₃) umgesetzt werden. Lanthanoxid (La₂O₃) kann mit Fluorwasserstoff zu Lanthanfluorid (LaF₃) umgesetzt werden, welches mit elementarem Calcium zu elementarem Lanthan (La) reduziert werden kann.

Die mit dem erfindungsgemäßen Verfahren gewonnenen Lanthansalze und die daraus durch chemische Umwandlungen erhältlichen Produkte wie beispielsweise elementares Lanthan (La) können für eine Vielzahl von technischen Anwendungen verwendet werden.

So kann beispielsweise Lanthanoxid, welches ausgehend von einem gemäß der vorliegenden Erfindung erhaltenen Lanthansalz gewonnen wird, für die Herstellung von hochbrechenden Gläsern für die Produktion von optischen Linsen, für die Herstellung von Kristallglas, silikatfreien Gläsern, Glaspoliermitteln, Porzellanglasuren und keramischen Kondensatormassen verwendet werden.

So kann beispielsweise elementares Lanthan, welches ausgehend von einem gemäß der vorliegenden Erfindung erhaltenen Lanthansalz gewonnen wird, für die Herstellung von Legierungen mit Metallen wie Chrom, Mangen, Eisen, Cobalt, Nickel, Eisen Strontium und Titan verwendet werden. Die so erhaltenen Lanthanlegierungen können beispielsweise als Magnetwerkstoffe, Wasserstoffspeicher, Kathodenmaterialien und als Werkstoffe für die Herstellung von korrosionsbeständigen medizinischen Instrumenten verwendet werden. Ebenso kann elementares Lanthan, welches ausgehend von einem gemäß der vorliegenden Erfindung erhaltenen Lanthansalz gewonnen wird in der Stahlherstellung zur reduktiven Entfernung von nichtmetallischen Verunreinigungen sowie als Gusseisenzusatz verwendet werden.

Zudem können weitere Lanthan-Verbindungen aus den gemäß der vorliegenden Erfindung erhaltenen Lanthansalzen gewonnen werden, wie beispielsweise Lanthanborid (LaB₆), die als Kathodenmaterialien, verwendet werden können, oder wie beispielsweise Lanthanverbindungen, die mit Seltenerdmetallen wie beispielsweise Europiumoxid oder Samariumoxid dotiert sind und als Fluoreszenzmaterialien verwendet werden können.

Des weiteren können die gemäß der vorliegenden Erfindung gewonnenen Lanthansalze für die Herstellung von Katalysatoren verwendet werden.

### Verfahrensführung:

Das erfindungsgemäße Verfahren kann auf kontinuierliche oder diskontinuierliche (batch) Weise geführt werden.

Die vorliegende Erfindung stellt ein Verfahren bereit, welches die Rückgewinnung von Lanthan aus lanthanhaltigen Zeolithen gestattet und sich durch einen Verzicht auf die Verwendung korrodierender Gase wie Chlor und Chlorwasserstoff sowie korrodierender oxidativer Metallschmelzen auszeichnet und dadurch die apparativen Anforderungen und die Prozessführung der Rückgewinnung vereinfacht. Insbesondere stellt die vorliegende Erfindung ein Verfahren bereit, welches die Rückgewinnung von Lanthan aus lanthanhaltigen Zeolithen gestattet und sich durch eine hohe Ausbeute an zurückgewonnenem Lanthan nach nur einem verfahrensgemäßen Rückgewinnungszyklus auszeichnet. Darüber hinaus stellt die vorliegende Erfindung ein Verfahren bereit, welches die Rückgewinnung von Lanthan aus lanthanhaltigen Zeolithen ermöglicht und sich durch einen verringerten Einsatz von Energie und Zeit auszeichnet. Darüber hinaus stellt die vorliegende Erfindung ein Verfahren bereit, welches die Rückgewinnung von Lanthan aus lanthanhaltigen Zeolith-Verbindungen ermöglicht, die als Katalysator-Abfälle aus großtechnischen chemischen Stoffumwandlungsprozessen, wie beispielsweise dem FCC-Verfahren, dem Hyärocracking-Verfahren oder dem Claus-Prozess, anfallen.

### Beispiele:

Die nachfolgenden Beispiele veranschaulichen die Wirkung des erfindungsgemäßen Verfahrens:
Ein lanthanhaltige Zeolith-Katalysator, welcher in einem FCC-Verfahren zum Cracken von Kohlenwasserstoffen eingesetzt worden war, diente als Ausgangsmaterial für die in Tab. 1 beschriebenen Experimente.

In der Referenzanalyse wurde die Zusammensetzung des aus dem FCC-Verfahren stammenden lanthanhaltigen Zeolith-Katalysators mittels Optischer ICP-Fmissionsspektrometrie (ICP-OES), Infrarotspektroskopie (IR) bei 950 °C und Röntgenfluoreszenzanalyse (RFA) ermittelt. Die Gehaltsbestimmungen der in Tab. 1 angegebenen Metallspezies wurden ausgehend von der unbehandelten Festsubstanz des lanthanhaltigen Zeolith-Katalysators durchgeführt.

Für die Versuche 1 und 2 sowie die Vergleichsversuche 1 und 2 wurden jeweils 5 g der lanthanhaltigen Zeolith-Katalysator Probe mit ca. 100 mL versetzt und gekocht (s. Tab. 1). Für die Probe bei pH 0 (Versuch 1) wurde eine ca. 1 mol/l Salzsäure verwendet. Die Probe bei PH 3 (Versuch 2) wurde mit Salzsäure 37% eingestellt und die Probe bei pH 6 (Vergleichsversuch 1) wurde lediglich in Wasser gekocht. Die Probe bei pH 14 (Vergleichsversuch 2) wurde mit KOH 2 Stunden am Rückfluss gekocht. Alle Proben wurden jeweils nach ca. 15 min Kochzeit abfiltriert und mit Wasser gespült. Der Rückstand wurde bei 105°C getrocknet und das Filtrat auf 200 ml aufgefüllt.

Die Lanthangehalte im Filterrückstand und Filtrat wurden mittels Optischer ICP-Emissionsspektrometrie (ICP-OES) bestimmt. Die Gehalte von Calciumoxid, Magnesiumoxid, Sulfat als SO₃, Natriumoxid und Kaliumoxid im Filtrat wurden mittels Röntgenfluoreszenzanalyse (RFA) bestimmt (s. Tab. 1).

**Tab. 1**

| **Experiment:** | | | **Referenz-analyse** | **Versuch 1** | **Versuch 2** | **Vergleichsversuch 1** | **Vergleichsversuch 2** |
|---|---|---|---|---|---|---|---|
| **Probenbezeichnung:** | | | FCC Fluid Catalytic Cracking | pH 0 | pH 3 | pH 6 | pH 14 |
| Trockenrückstand | | % | | 79.50 | 98.69 | 99.27 | 78.91 |
| Lanthan im Filtrat | ICP-OES | % | | 1.87 | 0.15 | <0.01 | <001 |
| Lanthan in Rückstand | ICP-OES | % | 1.20 | 0.10 | 090 | 0.90 | 0.90 |
| gelöstes Lanthan | gerechnet | % | | 94.92 | 14.29 | <1 | <1 |
| | | | | | | | |
| Kohlendioxid | 950 °C/ IR | % | 0.15 | | | | |
| Wasser | 950 °C/ IR | % | 2.60 | | | | |
| Silizium(IV)-oxid | RFA | % | 47.54 | | | | |
| Aluminiumoxid | RFA | % | 42.50 | | | | |
| Eisen(lll)-oxid | RFA | % | 0.07 | | | | |
| Phosphor(V)-oxid | RFA | % | 0.14 | | | | |
| Titandioxid | RFA | % | 1.11 | | | | |
| Mangan(III)-oxid | RFA | % | 0.01 | | | | |
| Calciumoxid | RFA | % | 0.11 | 0.03* | <0.01* | <0.01* | |
| Magnesiumoxid | RFA | % | 0.10 | 0.01* | <0.01* | <0.01* | |
| Sulfat als SO₃ | RFA | % | 0.14 | 0.03* | <0.01* | <0.01* | |
| Natriumoxid | RFA | % | 0.72 | 0.20* | 0.05 | 0.01* | |
| Kaliumoxid | RFA | % | 0.01 | 0.02* | 0.01 | <0.01* | |

| | | | | | | | |
|---|---|---|---|---|---|---|---|
| * gelöste Ionen im Filtrat | | | | | | | |

Die Ergebnisse in Tab. 1 zeigen, dass bei einem pH-Wert von 0 (Versuch 1) 94.92% der Lanthan-Atome aus dem verwendeten lanthanhaltigen Zeolith-Katalysator gelöst werden, während bei pH-Werten von größer 3 (Vergleichsversuche und 2) weniger als 0.01% der Lanthan-Atome aus dem verwendeten lanthanhaltigen Zeolith-Katalysator gelöst werden.

## Patentansprüche

1. Verfahren zur Rückgewinnung von Lanthan aus lanthanhaltigen Zeolithen, **dadurch gekennzeichnet, dass** (A) eine oder mehrere lanthanhaltige Zeolith-Verbindungen mit einer wässrigen Säure versetzt werden, so dass ein pH-Wert von kleiner oder gleich 3 vorliegt, und (B) gelöstes Lanthan abgetrennt wird.

2. Verfahren zur Rückgewinnung von Lanthan aus lanthanhaltigen Zeolithen gemäß Anspruch 1, **dadurch gekennzeichnet, dass** die lanthanhaltigen Zeolith-Verbindungen eine Korngröße von kleiner oder gleich 200 µm aufweisen.

3. Verfahren zur Rückgewinnung von Lanthan aus lanthanhaltigen Zeolithen gemäß Anspruch 1, **dadurch gekennzeichnet, dass** die lanthanhaltigen Zeolith-Verbindungen eine Korngröße von kleiner oder gleich 10 µm aufweisen.

4. Verfahren zur Rückgewinnung von Lanthan aus lanthanhaltigen Zeolithen gemäß der Ansprüche 1, 2 oder 3, **dadurch gekennzeichnet, dass** die lanthanhaltigen Zeolith-Verbindungen in einem Gemisch mit weiteren nichtlanthanhaltigen Verbindungen vorliegen.

5. Verfahren zur Rückgewinnung von Lanthan aus lanthanhaltigen Zeolithen gemäß der Ansprüche 1, 2, 3 oder 4, **dadurch gekennzeichnet, dass** die lanthanhaltigen Zeolith-Verbindungen eine Faujasit- und/oder Zeolith Y-Struktur aufweisen.

6. Verfahren zur Rückgewinnung von Lanthan aus lanthanhaltigen Zeolithen gemäß Anspruch 5, **dadurch gekennzeichnet, dass** die lanthanhaltigen Zeolith-Verbindungen Aluminium in einem Stoffmengenanteil von 37.5 bis 47.5 Mol-% Al₂O₃ und Silizium in einem Stoffmengenanteil von 42.5 bis 52.5 Mol-% SiO₂ enthalten, wobei für jede lanthanhaltige Zeolith-Verbindung die Summe der Stoffmengenanteile aller vorhandener Bestandteile 100 Mol-% beträgt.

7. Verfahren zur Rückgewinnung von Lanthan aus lanthanhaltigen Zeolithen gemäß Anspruch 6, **dadurch gekennzeichnet dass** die lanthanhaltigen Zeolith-Verbindungen Lanthan in einem Stoffanengenanteil von 0.5 bis 5 Mol-% La₂O₃ enthalten.

8. Verfahren zur Rückgewinnung von Lanthan aus lanthanhaltigen Zeolithen gemäß der Ansprüche 1, 2, 3, 4, 5, 6 oder 7, **dadurch gekennzeichnet, dass** der pH-Wert kleiner oder gleich 2 ist.

9. Verfahren zur Rückgewinnung von Lanthan aus lanthanhaltigen Zeolithen gemäß der Ansprüche 1, 2, 3, 4, 5, 6 oder 7, **dadurch gekennzeichnet, dass** der pH-Wert kleiner oder gleich 1 ist.

10. Verfahren zur Rückgewinnung von Lanthan aus lanthanhaltigen Zeolithen gemäß der Ansprüche 1, 2, 3, 4, 5, 6 oder 7, **dadurch gekennzeichnet, dass** der pH-Wert kleiner oder gleich 0 ist.

11. Verfahren zur Rückgewinnung von Lanthan aus lanthanhaltigen Zeolithen gemäß der Ansprüche 1, 2, 3, 4, 5, 6, 7, 8, 9 oder 10, **dadurch gekennzeichnet, dass** die wässrige Säure wässrige Salzsäure, wässrige Schwefelsäure oder wässrige Salpetersäure oder ein Gemisch aus mindestens zwei dieser Säuren ist.

12. Verfahren zur Rückgewinnung von Lanthan aus lanthanhaltigen Zeolithen gemäß der Ansprüche 1, 2, 3, 4, 5, 6, 7, 8, 9, 10 oder 11, **dadurch gekennzeichnet, dass** (B) gelöstes Lanthan mittels Filtration vom unlöslichen festen Rückstand abgetrennt wird.

13. Verfahren zur Rückgewinnung von Lanthan aus lanthanhaltigen Zeolithen gemäß Anspruch 12, **dadurch gekennzeichnet, dass** im Filtrat gelöstes Lanthan durch selektive Kristallisation, selektive Fällung oder selektiven Ionenaustausch von im Filtrat gelösten Aluminium abgetrennt wird.

14. Verfahren zur Rückgewinnung von Lanthan aus lanthanhaltigen Zeolithen gemäß der Ansprüche 1, 2, 3, 4, 5, 6, 7, 8, 9, 10, 11, 12 oder 13, **dadurch gekennzeichnet, dass** (A) eine oder mehrere lanthanhaltige Zeolith-Verbindungen mit einer wässrigen Säure versetzt werden und während des sauren Aufschlusses keine Wärmezufuhr von außen erfolgt.
